(19) **Europäisches Patentamt**
**European Patent Office**
**Office européen des brevets**

(11) **EP 4 565 949 B1**

(12) **EUROPEAN PATENT SPECIFICATION**

(45) Date of publication and mention
of the grant of the patent:
**17.09.2025  Bulletin 2025/38**

(21) Application number: **24716340.5**

(22) Date of filing: **28.03.2024**

(51) International Patent Classification (IPC):
***G06F 8/41*** *(2018.01)*

(52) Cooperative Patent Classification (CPC):
**G06F 8/423; G06F 8/447; G06F 8/451**

(86) International application number:
**PCT/EP2024/058602**

(87) International publication number:
**WO 2024/200720 (03.10.2024 Gazette 2024/40)**

(54) **SEMICONDUCTOR SYSTEMS AND COMPUTER-IMPLEMENTED METHODS OF PROBABILISTIC INFERENCE DATA PROCESSING**

HALBLEITERSYSTEME UND COMPUTERIMPLEMENTIERTE VERFAHREN ZUR VERARBEITUNG PROBABILISTISCHER INFERENZDATEN

SYSTÈMES SEMI-CONDUCTEURS ET MÉTHODES DE TRAITEMENT DES DONNÉES D'INFÉRENCE PROBABILISTE MISES EN OEUVRE PAR ORDINATEUR

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**

(30) Priority: **28.03.2023  EP 23164648**

(43) Date of publication of application:
**11.06.2025  Bulletin 2025/24**

(73) Proprietor: **Hawai.Tech**
**38000 Grenoble (FR)**

(72) Inventors:
• **BERNERT, Marie**
**Grenoble / 38000 (FR)**
• **CHERKAOUI, Abdelkarim**
**Grenoble / 38000 (FR)**
• **LAURENT, Raphaël**
**Grenoble / 38000 (FR)**
• **SIMATIC, Jean**
**Grenoble / 38000 (FR)**

(74) Representative: **A.P.I. Conseil**
**Technopôle Hélioparc**
**4, rue Jules Ferry**
**64000 Pau (FR)**

(56) References cited:
• **REZAUR  RAHMAN: "Xeon Phi Core Microarchitecture", 31 December 2013 (2013-12-31), XP055355461, ISBN: 978-1-4302-5927-5, Retrieved from the Internet <URL:http://www.apress.com/gp/book/ 9781430259268?wt_mc=ThirdParty.RD.3. EPR653.About_eBook> [retrieved on 20170316], DOI: 10.1007/978-1-4302-5927-5**
• **ANONYMOUS: "Preprocessor - Wikipedia", 17 December 2022 (2022-12-17), pages 1 - 4, XP093169781, Retrieved from the Internet <URL:https://en.wikipedia.org/w/index.php? title=Preprocessor&oldid=1127941052> [retrieved on 20240603]**

## Description

## Technical Field

The subject application relates to hardware for probabilistic programming. In particular, it relates to semiconductor systems and computer-implemented methods configured to provide probabilistic inference data processing for solving probabilistic models. Similar systems are known from Rahman, Rezaur. (2013). Xeon Phi Core Microarchitecture. 10.1007/978-1-4302-5927-5_4.

## Background Art

The skilled person knows that the goal of probabilistic programming is to automate inference in probabilistic models that are expressed as a computer program code.
The skilled person also knows that such probabilistic models can be solved using approximate inference algorithms that can be either sampling-based or optimization-based.
It is also known that optimization-based algorithms are considered faster than sampling-based algorithms, thanks to physical implementations where corresponding computer program code is accelerated on Graphics Processing Units (GPUs) that are working in parallel.
However, such implementations are inefficient when applied to sampling-based algorithms.
Indeed, having several GPUs that are working in parallel won't provide proper acceleration because sampling-based algorithms require to execute sequentially some operations before some other operations.
Hence, having several GPUs that are working in parallel won't help.
It is an object of the present subject application to provide a mechanism for enabling acceleration of sampling-based algorithms for solving probabilistic models.

## Summary of Subject application

The subject application provides a semiconductor system and a computer-implemented method configured to provide probabilistic inference data processing for a solving probabilistic model, as described in the accompanying claims.
Dependent claims describe specific embodiments of the subject application.
These and other aspects of the subject application will be apparent from and elucidated based on the embodiments described hereinafter.

## Brief Description of Drawings

Further details, aspects and embodiments of the subject application will be described, by way of example only, with reference to the drawings. In the drawings, like reference numbers are used to identify like or functionally similar elements. Elements in the figures are illustrated for simplicity and clarity and have not necessarily been drawn to scale.

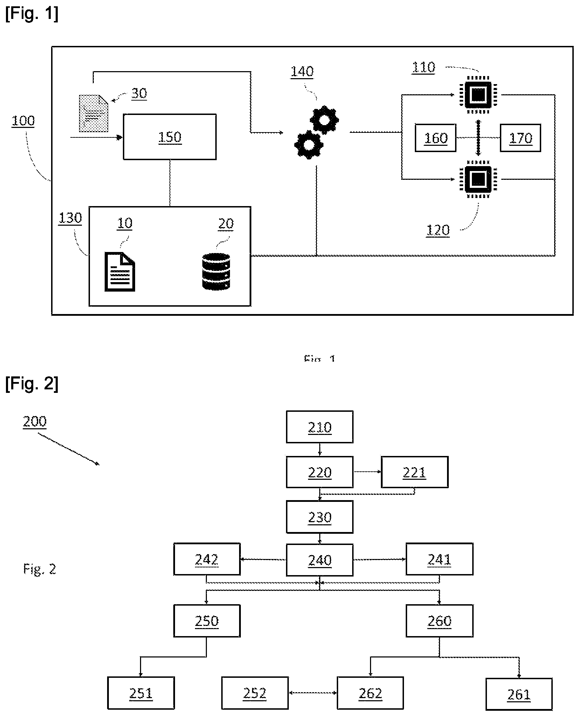

Figure 1 shows a schematic diagram of a semiconductor system according to the subject application. Figure 2 shows a schematic flow diagram according to the subject application.

## Description of Embodiments

In order not to obfuscate or distract from the teachings of the subject application, and because the illustrated embodiments of the subject application may, for the most part, be composed of components known to the skilled person, details will not be described in any greater extent than that considered necessary for the understanding and appreciation of the underlying concepts of the subject application.
The inventors have found that using a dedicated processor-coprocessor architecture enables the acceleration of sampling-based algorithms for solving probabilistic models.
In particular, the inventors propose to configure a precompiler that astutely distribute between a processor and a coprocessor, the executable instructions associated with portions of the computer program code implementing the sampling-based algorithms.
Indeed, in the subject application, the coprocessor is configured to be specialized in efficiently executing probability distribution calculations.
For instance, in the subject application, the coprocessor is configured to be specialized in efficiently executing the drawing of random samples from probability distribution functions.
Also, in the subject application, the coprocessor is configured to be specialized in efficiently executing at least part of a probabilistic fusion of probability distribution functions. Put simply, a probabilistic fusion is an operation that comprises the computing of a probability distribution (which may be approximated by a set of samples) on a variable V knowing a set of observations/measurements $O_i$ and knowing a binary relation between V and each $O_i$.
For example, in the context of an autonomous car, the positioning of the wheel of the car using a set of car sensor values (i.e., the observations) is a probabilistic fusion.
With the proposed architecture, the developer of a sampling-based algorithm does not have to explicitly write a code for the drawing of random samples from probability distribution functions or part of a probabilistic fusion, since the corresponding executable instructions would be executed by the coprocessor after a function call has been detected for the drawing of random samples from probability distribution functions or part of a probabilistic fusion.

## First aspect: the semiconductor system

A first aspect of the subject application is illustrated in figure 1 and relates to a semiconductor system 100 that is configured to provide probabilistic inference data processing.

In an example of the first aspect of the subject application, the semiconductor system 100 is implemented on a programmable system-on-chip platform such as the known Adaptive Compute Acceleration Platform (ACAP™) that includes a large FPGA fabric.

However, other known system-on-chip platforms, programmable or specialized hardware, may be used, without requiring any substantial modification of the subject application.

Similar to a Graphics Programming Unit (GPU) which is a specialized electronic circuit dedicated to graphics rendering, the semiconductor system 100 can be considered as a Probabilistic Inference Programming Unit (PIPU) which is a specialized electronic circuit dedicated to probabilistic inference data processing.

In the first aspect of the subject application, the semiconductor system 100 comprises at least one main processor 110, at least one coprocessor 120, at least one memory 130, at least one compiler 140 and at least one precompiler 150.

In other words, one should understand that the semiconductor system 100 may comprise more than one main processor 110, more than one coprocessor 120, more than one memory 130 more than one compiler 140 and/or more than one precompiler 150.

In an embodiment of the first aspect of the subject application, one or more among, the main processor 110, the coprocessor 120, the memory 130, the compiler 140 and the precompiler 150, are semiconductor devices.

In the first aspect of the subject application, the main processor 110 and the coprocessor 120 are of known types such as a CPU, an ASIC, FPGA or any other suitable processor that can execute executable instructions associated with one or more computer program codes.

As used herein, a computer program code is a list of executable instructions, such as a particular application program and/or an operating system. The computer program code may for example include one or more of a subroutine, a function, a procedure, an object method, an object implementation, an executable application, an applet, a servlet, a source code, an object code, a shared library/dynamic load library and/or other sequence of instructions designed for execution on a computer system.

In the first aspect of the subject application, the executable instructions may be stored in the memory 130 before being executed by the main processor 110 and/or the coprocessor 120.

As generally known in the art of data processing devices having a main processor, a coprocessor is a microprocessor that is distinct from the main processor and that is used to perform specified functions that the main processor cannot perform at all or cannot perform as well and/or as quickly.

In particular, a processor, also known as a central processing unit (CPU), is the main component of a computer system that carries out most of the processing tasks. It is responsible for executing instructions that are stored in memory and for performing calculations and logical operations. CPUs can have one or more processing cores, each capable of executing multiple instructions simultaneously.

In contrast, a coprocessor, also called an auxiliary processor or math coprocessor, is a specialized component that works alongside the CPU to perform specific tasks more efficiently. Coprocessors are designed to handle complex mathematical operations, such as floating-point arithmetic, which can be time-consuming for a CPU to perform. They can also offload certain tasks from the CPU to improve overall performance.

In the first aspect of the subject application, the coprocessor 120 is configured to perform probabilistic inference data processing that cannot be performed at all or that cannot be performed as well and/or as quickly by the main processor 110.

In the first aspect of the subject application, the memory 130 is of known type as R FLASH memory, EEPROM, EPROM, ROM; ferromagnetic or antiferromagnetic digital memories; MRAM; volatile storage media including registers, buffers or caches, main memory, RAM or any other suitable volatile or non volatile electronic data storage.

In particular, the memory 130 is configured to store a set of role profiles 10 and a function signature database 20.

In an embodiment of the memory 130, the set of role profiles 10 is stored as one or more files, one or more sections of executable instructions, one or more separate records or same record of a database, or any other suitable file structure that is accessible by the main processor 110 and/or the coprocessor 120.

In practice, each role profile 10 of the set of role profiles 10 defines the role of the main processor 110 and the role of the coprocessor 120 in executing executable instructions associated with one or more computer program codes.

In a first embodiment of the set of role profiles 10, at least one role profile 10 defines the role of each of a plurality of main processors 110.

In other words, one should understand that more than one role profile 10 may be used in combination to define the role of each of a plurality of main processors 110.

In a second embodiment of the set of role profiles 10, at least one role profile 10 defines the role of each of a plurality of coprocessors 120.

In other words, one should understand that more than one role profile 10 may be used in combination to define the role of each of a plurality of main coprocessors 120.

The function signature database 20 associates a function signature with at least one role profile 10.

As generally known in the art of computer science, a function is a computer program code snippet that can be called by other computer program code or by itself.

As used herein, a function (also called 'method' in some programming languages) has a name such as 'foo' in the following exemplary function as declared in the JavaScript programming language:

function foo(arg1, arg2) {...}

Still, as generally known in the art of computer science, a signature of a function defines the input(s) and output(s) of a function such as 'arg1' and 'arg2' in the above exemplary 'foo' function. In other words, the signature of a function includes the function name and its arguments.

Depending on the programming language, the signature of a function may comprise the types of the input(s) and output(s) of the function as exemplified with 'bar' function as declared in the C programming language and wherein the type of the return value and of the arguments 'a' and 'b' is an integer:

int bar(int a, int b);

As generally known in the art computer programming, a precompiler is a software tool that processes source code before it is compiled. It typically performs tasks such as macro expansion, file inclusion, and conditional compilation. The output of the precompiler is a modified version of the source code, which is then fed into the compiler for further processing. The modified source code may contain additional code that was added by the precompiler or may have sections of code removed based on the precompiler's processing.

In the first aspect of the subject application, the precompiler 150 is configured to receive a computer program code 30 which is in the form of a high-level programming language such as C, C++, C#, Java$^{tm}$, Python or any suitable high-level programming language.

In particular, the computer program code 30 is implementing at least one probabilistic inference algorithm configured to solve a probabilistic model.

In other words, one should understand that more than one probabilistic inference algorithm may be implemented by the computer program code 30.

As generally known in the art of probability theory and statistics, a probabilistic model allows one to infer, predict and make decisions based on incomplete or noisy data. Usually, in the art of probabilistic programming, a probabilistic model is expressed as a computer program code that can draw random values and condition the resulting stochastic execution on data. In practice, a probabilistic model is implemented using programming constructs such as recursion, stochastic branching, higher-order functions, and highly developed simulation libraries thereby allowing one to easily express and perform inference in probabilistic models that have simulators, a dynamic number of latent variables, highly structured latent variables or nested probabilistic models.

As also generally known in the art of probability theory and statistics, a probabilistic inference algorithm is configured to derive the probability of one or more random variables by considering a specific value or a set of values, in order to solve a probabilistic model.

For example, a Bernoulli (Boolean) random variable may describe the event that a given person has a disease. Such a variable could take a value of 1 (the person has the disease) or 0 (the person does not have the disease). In that case, the probabilistic inference algorithm uses probabilistic inference to estimate the probability that the random variable takes the value 1. For instance, a probability of 0.78 would mean that the person is 78% likely to have the disease.

In an embodiment, the probabilistic inference algorithm may be selected among, sequential Monte Carlo, variational inference and Markov chain Monte Carlo.

However, other known probabilistic inference algorithms may be contemplated, without requiring any substantial modification of the subject application.

In the first aspect of the subject application, the computer program code 30 comprises at least one first high-level programming statement, called sampling step, that is representative of the operation of sampling at least one random sample from at least one probability distribution function.

In other words, one should understand that more than one sampling step may be comprised in the computer program code 30 and that each sampling step may be representative of the operation of sampling more than one random sample from more than one probability distribution function.

In the first aspect of the subject application, the precompiler 150 is further configured to select a role profile 10 out of a set of role profiles 10, in response to locating a matching entry of a function signature of the sampling step in the function signature database 20.

In the first aspect of the subject application, the precompiler 150 is further configured to generate, based on the computer program code 30 and the selected role profile 10, a flag information that is indicative of whether the first high-level programming statement is representative of sampling at least one random sample from:

- a parametric probability distribution function, or
- a non-parametric probability distribution function.

In an example, the flag information may be stored as a file or an appropriate data structure in the memory 130.

In the first aspect of the subject application, the parametric probability distribution function is defined by a finite number of input parameters.

The input parameters are arguments of the parametric probability distribution function that will be described hereinafter.

Also, in the first aspect of the subject application, the nonparametric probability distribution function is defined by a plurality of first input data and at least one intermediate parameter.

In other words, one should understand that the nonparametric probability distribution function may be defined by a plurality of first input data and more than one intermediate parameter.

The first input data is an argument of the nonparametric probability distribution function, while the intermediate parameter is a parameter that is defined or calculated based on other parameters such as the first input data. Both will be described hereinafter.

As generally known in the art computer programming, a compiler is a software tool that translates source code written in a programming language into executable machine code that can be run on a computer. The compiler takes the entire source code as input, analyzes it, and generates a binary executable file. The executable file can then be run directly on the computer without any further processing.

In the first aspect of the subject application, the compiler 140 is configured to,

- convert the computer program code 30 into first executable instructions, based on the flag information, and
- distribute the instructions between the main processor and coprocessor according to the role profiles such that the coprocessor executes the sampling step instructions and the main processor executes the non-sampling step instructions.

Further, based on the selected role profile 10, the main processor 110 is configured to execute at least a first portion of the first executable instructions.

Then, based on the selected role profile 10, the coprocessor 120 is configured to execute at least a second portion of the first executable instructions.

**First embodiment of the first aspect: parametric probability distribution function**

A first embodiment of the first aspect of the subject application occurs when,

- the flag information is indicative of the first high-level programming statement being representative of sampling at least one random sample from a parametric probability distribution function, and
- the computer program code 30 comprises at least one second high-level programming statement.

As generally known in the art of probability theory and statistics, parametric probability distribution functions are solely based on parametrized families of probability distributions (e.g., common examples of parameters are the mean and variance).

In an example, the probability distribution function is a multidimensional normal law $\mathcal{N}$ having as input parameters, an averaged vector $\mu$ and a covariance matrix $\sigma$:

$$\mathcal{N}(\mu,\ \sigma^2)$$

In that case, the first high-level programming statement may comprise a call to a function having the following signature:

function normalLawMulti(mu, sigma) {... }

where mu and sigma are arguments of the function 'normalLawMulti', which are respectively corresponding to the input parameters $\mu$ and $\sigma$ of the multidimensional normal law $\mathcal{N}$.

In the first embodiment of the first aspect, the second high-level programming statement, called first calculating step, is representative of the operation of calculating of the input parameters based on at least one previous random sample value and/or at least one second input data.

In other words, one should understand that more than one first calculating step may be comprised in the computer program code 30 and that each first calculating step may be representative of the operation of calculating of the input parameters based on more than one previous random sample value and/or more than one second input data.

In an example, the second input data is selected among, data acquired by one or more sensors, data provided as a constraint to solve the probabilistic model.

However, data from other data sources may be used, without requiring any substantial modification of the subject application.

Further, the compiler 140 is configured to convert,

- the computer program code 30 associated with the first calculating step into second executable instructions, and
- the computer program code 30 associated with the sampling step into third executable instructions.

Still further, the main processor 110 is configured to execute the second executable instructions, and to transmit a first result of the second executable instructions to the coprocessor 120.

Said differently, with respect to the example given above, the first result would correspond to the arguments mu and sigma.

Still further, the coprocessor 120 is configured to execute the third executable instructions, while using the first result of the second executable instructions as input parameters, thereby drawing at least one random sample from the probability distribution function using the calculated input parameters.

In other words, one should understand that more than one random sample may be drawn from the probability distribution function using the calculated input parameters.

Said differently, with respect to the example given above, the drawing of a random sample from the probability distribution function would correspond to calling the function 'normalLawMulti' with the arguments mu and sigma.

In an example of the first embodiment of the first aspect of the subject application, the semiconductor system 100 further comprises a first buffer 160 for temporarily storing results of executed instructions.

In the example of the first embodiment of the first aspect of the subject application, the main processor 110 is configured to transmit the first result of the second executable instructions to the coprocessor 120 after buffering by the first buffer 160.

## Second embodiment of the first aspect: nonparametric probability distribution function

A second embodiment of the first aspect of the subject application occurs when,

- the flag information is indicative of the first high-level programming statement being representative of sampling at least one random sample from a nonparametric probability distribution function, and
- the first high-level programming statement comprises,

    - at least one first high-level programming sub-statement, and
    - at least one second high-level programming sub-statement.

As generally known in the art of probability theory and statistics, nonparametric probability distribution functions are not based solely on parametrized families of probability distributions (e.g., input parameters $\mu$ and $\sigma$ of the multidimensional normal law $\mathcal{N}$ as described above in the first embodiment of the first aspect), because it is not possible to accurately describe a data sample using a parametric distribution. Instead, nonparametric probability distribution functions are based on either being distribution-free or having a specified distribution but with the distribution's parameters unspecified. In practice, nonparametric probability distribution functions are estimated from data based on known methods such as histograms, kernel distribution, empirical cumulative distribution function, piecewise linear distribution, pareto tails and triangular distribution.

In an example, the nonparametric probability distribution function is a product of elementary probability distribution functions, that is, a probabilistic fusion of probability distribution functions.

In that case, direct sampling of the target probability distribution function $\pi(x)$ is cumbersome and sampling intensive approaches such as Markov Chain Monte Carlo (MCMC) techniques or Approximate Bayesian Computation (ABC) techniques need to be used.

In practice, MCMC and ABC techniques provide random samples of x values, drawn from one or more proposal probability distribution functions, which follow the posterior distribution. These samples can then be used to compute an empirical approximation of the posterior probability distribution function.

However, other known sampling intensive approaches may be contemplated, without requiring any substantial modification of the subject application.

In order to exemplify the second embodiment of the first aspect of the subject application, the random drawing step will be considered as being representative of the Multiple-Try Metropolis (MTM) algorithm which basic idea is to construct an ergodic Markov chain in the state of a variable of interest $x$ that has the target probability distribution function as its stationary distribution.

Below, we will summarize the principles of MTM algorithms. However, one can get further details in Pandolfi, S., Bartolucci, F. & Friel, N. (2010). A generalization of the Multiple-try Metropolis algorithm for Bayesian estimation and model selection. Proceedings of the Thirteenth International Conference on Artificial Intelligence and Statistics, in Proceedings of Machine Learning Research 9:581-588, https://proceedings.mlr.press/v9/pandolfi10a.html.

In principle, the MTM algorithm may be seen as a form of generalized rejection sampling, where the next state of the chain $x_{t+1}$ is drawn from a proposal distribution $T(x_t, \cdot)$ and the candidate point $x_{t+1} = y$ (where $y$ correspond to the observations/measurements) is accepted with the following probability, called Metropolis Hastings (MH) ratio:

$$\alpha = min\left\{1, \frac{\pi(y)T(y, x_t)}{\pi(x_t)T(x_t, y)}\right\}$$

In this way, the generated chain is reversible, with invariant/stationary distribution $\pi(y)$, because it satisfies the detailed balance condition, i.e., $\pi(y)P(y,x) = \pi(x)P(x, y)$ where $P(y, x)$ is the transition kernel from $y$ to $x$.

In particular, the MTM algorithm suppose that the current state of the Markov chain is $x_t$ and considers,

- an arbitrary proposal function $T(x, y)$ that satisfies the condition $T(x, y) > 0 \Leftrightarrow T(y, x) > 0$, and
- an arbitrary nonnegative symmetric function $\lambda(x, y)$.

Then, the MTM algorithm performs the following steps:

- step 1: draw $k$ independent trial proposals $y_1, ..., y_k$ from $T(x_t, \cdot)$
- step 2: select a point y from $\{y_1, ... , y_k\}$ with probability proportional to $w(y_j, x_t) = \pi(y_j)T(y_j, x_t)\lambda(y_j, x_t)$, where $j = 1, ... , k$
- step 3: draw $x_1^*, ..., x_{k-1}^*$ from the distribution $T(y, \cdot)$ and set $x_k^* = x_t$.
- step 4: accept y with probability

$$\alpha = min\left\{1, \frac{w(y_1, x_t) + \cdots + w(y_k, x_t)}{w(x_1^*, y) + \cdots + w(x_k^*, y)}\right\}$$

In the second embodiment of the first aspect of the subject application, the first high-level programming sub-statement, called random drawing step, is representative of the operation of drawing of at least one random sample from a given probability distribution function.

In other words, one should understand that each sampling step may comprise more than one random drawing step, wherein each random drawing step is representative of the operation of drawing of more than one random sample from a given probability distribution function.

In the context of the MTM algorithm example, the random drawing step may correspond to step 1 and/or step 3.

In that case, the first high-level programming sub-statement may comprise a call to a function for drawing random samples from $T(x_t, \cdot)$ and/or $T(y, \cdot)$.

In the second embodiment of the first aspect of the subject application, the second high-level programming sub-statement, called second calculating step, is representative of the operation of calculating of the intermediate parameter, based on at least one previous random sample value and/or at least one of the first input data.

In other words, one should understand that each sampling step may comprise more than one second calculating step, wherein each second calculating step is representative of the operation of calculating of the intermediate parameter, based on more than one previous random sample value and/or more than one of the first input data.

In an example, the first input data is selected among, data acquired by one or more sensors, data provided as a constraint to solve the probabilistic model.

However, data from other data sources may be used, without requiring any substantial modification of the subject application.

In the context of the MTM algorithm example, the second calculating step may correspond to the calculating of the different terms in step 2 and/or step 4.

In that case, the second high-level programming sub-statement may comprise the calculation of $w(y_j, x_t)$ and/or $w(x_j^*, y)$.

In the second embodiment of the first aspect of the subject application, the compiler 140 is configured to convert,

- the computer program code 30 associated with the random drawing step into fourth executable instructions, and
- the computer program code 30 associated with the second calculating step into fifth executable instructions.

Further, the coprocessor 120 is configured to execute the fourth executable instructions, thereby drawing a plurality of random samples from a probability distribution function.

Then, the coprocessor 120 is configured to transmit a second result of the fourth executable instructions to the main processor 110.

Said differently, the second result would correspond to the plurality of random samples.

Still further, the main processor 110 is configured to execute the fifth executable instructions, while using the second result and/or the first input data as input parameters, thereby calculating at least one intermediate parameter.

In a first particular embodiment, the main processor 110 may be configured to transmit a third result of the fifth executable instructions to the coprocessor 120.

In a second particular embodiment, the following operations may be repeated a predetermined number of times:

- the coprocessor 120 executing the fourth executable instructions,
- the coprocessor 120 transmitting the second result of the fourth executable instructions to the main processor 110, and
- the main processor 110 executing the fifth executable instructions.

In an example of the second embodiment of the first aspect of the subject application, the semiconductor system 100 further comprises a second buffer 170 configured to temporarily store results of executed instructions.

In the example of the second embodiment of the first aspect of the subject application, the main processor 110 is configured to transmit the third result of the fifth executable instructions to the coprocessor 120 after buffering by the second buffer 170 and the coprocessor 120 is configured to transmit the second result of the fourth executable instructions to the main processor 110 after buffering by the second buffer 170.

## Third embodiment of the first aspect: multiple role profiles

A third embodiment of the first aspect of the subject application occurs when a function signature of the function signature database 20 is associated with a plurality of role profiles 10.

In that case, in a first example, the precompiler 150 is further configured to randomly select the role profile 10 out of the plurality of role profiles 10.

Further, in a second example, the precompiler 150 is further configured to select the role profile 10 out of the plurality of role profiles 10 based on a call-context amount per processing elements of the main processor 110 and the coprocessor 120.

Finally, in a third example, the precompiler 150 is further configured to select the role profile 10 out of the plurality of role profiles 10 based on a physical resource utilization (e.g., including memory communication buses and processing elements) of the main processor 110 and the coprocessor 120.

## Second aspect: the method

A second aspect of the subject application is illustrated in figure 2 and relates to a computer-implemented method 200 of probabilistic inference data processing in the semiconductor system 100 described above.

With the precompiler 150, the computer-implemented method 200 comprises the step of receiving 210 a computer program code 30 described above, which is in the form of a high-level programming language, and which is implementing at least one probabilistic inference algorithm configured to solve a probabilistic model.

In the second aspect of the subject application, the computer program code 30 comprises at least one first high-level programming statement, called sampling step, that is representative of the operation of sampling at least one random sample from at least one probability distribution function.

In other words, as already described above, one should understand that more than one probabilistic inference algorithm may be implemented by the computer program code 30, that more than one sampling step may be comprised in the computer program code 30 and that each sampling step may be representative of the operation of sampling more than one random sample from more than one probability distribution function.

Still with the precompiler 150, the computer-implemented method 200 comprises the step of selecting 220 a role profile 10 out of a set of role profiles 10 described above, in response to locating a matching entry of a function signature of the sampling step in the function signature database 20.

Still further with the precompiler 150, the computer-implemented method 200 comprises the step of generating 230, based on the computer program code 30

and the selected role profile 10, a flag information that is indicative of whether the first high-level programming statement is representative of sampling at least one random sample from,

- a parametric probability distribution function, or
- a non-parametric probability distribution function.

In the second aspect of the subject application, the parametric probability distribution function is defined by a finite number of input parameters, as described above.

Also, in the second aspect of the subject application, the nonparametric probability distribution function is defined by a plurality of first input data and at least one intermediate parameter, as described above.

Further, with the compiler 140, the computer-implemented method 200 comprises the step of,

- converting 240 the computer program code 30 into first executable instructions, based on the flag information, and
- distributing the instructions between the main processor and coprocessor according to the role profiles such that the coprocessor executes the sampling step instructions and the main processor executes the non-sampling step instructions.

Still further, based on the selected role profile 10, with the main processor 110, the computer-implemented method 200 comprises the step of executing 250 at least a first portion of the first executable instructions.

Then, based on the selected role profile 10, with the coprocessor 120, the computer-implemented method 200 comprises the step of executing 260 at least a second portion of the first executable instructions.

## First embodiment of the second aspect: parametric probability distribution function

A first embodiment of the second aspect of the subject application occurs when,

- the flag information is indicative of the first high-level programming statement being representative of sampling at least one random sample from a parametric probability distribution function, and
- the computer program code 30 comprises at least one second high-level programming statement, called first calculating step, described above, and that is representative of the operation of calculating of the input parameters based on at least one previous random sample value and/or at least one second input data.

In other words, as already described above, one should understand that more than one first calculating step may be comprised in the computer program code 30 and that each first calculating step may be representative of the operation of calculating of the input parameters based on more than one previous random sample value and/or more than one second input data.

In the first embodiment of the second aspect of the subject application, with the compiler 140, the computer-implemented method 200 comprises the step of converting 241 the computer program code 30 associated with the first calculating step into second executable instructions.

Also, in the first embodiment of the second aspect of the subject application, with the compiler 140, the computer-implemented method 200 comprises the step of converting 241 the computer program code 30 associated with the sampling step into third executable instructions.

Further, with the main processor 110, the computer-implemented method 200 comprises the step of executing 251 the second executable instructions.

Still further, as already described above, with the main processor 110, the computer-implemented method 200 comprises the step of transmitting a first result of the second executable instructions to the coprocessor 120.

Later, with the coprocessor 120, the computer-implemented method 200 comprises the step of executing 261 the third executable instructions, while using the first result of the second executable instructions as input parameters, thereby drawing at least one random sample from the probability distribution function using the calculated input parameters.

In other words, as already described above, one should understand that more than one random sample may be drawn from the probability distribution function using the calculated input parameters.

An example of the first embodiment of the second aspect of the subject application occurs when the semiconductor system 100 further comprises a first buffer 160 configured to temporarily store results of executed instructions.

In that case, with the main processor 110, the computer-implemented method 200 comprises the step of transmitting the first result of the second executable instructions to the coprocessor 120 after buffering by the first buffer 160.

## Second embodiment of the second aspect: non-parametric probability distribution function

A second embodiment of the second aspect of the subject application occurs when,

- the flag information is indicative of the first high-level programming statement being representative of sampling at least one random sample from a non-parametric probability distribution function and the first high-level programming statement comprises, as described above,

- at least one first high-level programming sub-statement, called random drawing step, that is representative of the operation of drawing of at least one random sample from a given probability distribution function, and
- at least one second high-level programming sub-statement, called second calculating step, that is representative of the operation of calculating of the intermediate parameter, based on at least one previous random sample value and/or at least one of the first input data.

In other words, as already described above, one should understand that each sampling step may comprise more than one random drawing step, wherein each random drawing step is representative of the operation of drawing of more than one random sample from a given probability distribution function.

Also, as already described above, one should understand that each sampling step may comprise more than one second calculating step, wherein each second calculating step is representative of the operation of calculating of the intermediate parameter, based on more than one previous random sample value and/or more than one of the first input data.

In the second embodiment of the second aspect of the subject application, with the compiler 140, the computer-implemented method 200 comprises the step of converting 242,

- the computer program code 30 associated with the random drawing step into fourth executable instructions, and
- the computer program code 30 associated with the second calculating step into fifth executable instructions.

Further, with the coprocessor 120, the computer-implemented method 200 comprises the step of executing 262 the fourth executable instructions, thereby drawing a plurality of random samples from the probability distribution function.

Then, as already described above, with the coprocessor 120, the computer-implemented method 200 comprises the step of transmitting a second result of the fourth executable instructions to the main processor 110.

Still further, as already described above, with the main processor 110, the computer-implemented method 200 comprises the step of executing 252 the fifth executable instructions, while using the second result and/or the first input data as input parameters, thereby calculating at least one intermediate parameter.

In a first particular embodiment, with the main processor 110, the computer-implemented method 200 may comprise the step of transmitting a third result of the fifth executable instructions to the coprocessor 120.

In a second particular embodiment, the computer-implemented method 200 may comprise the step of repeating the following operations, a predetermined number of times:

- the coprocessor 120 executing the fourth executable instructions,
- the coprocessor 120 transmitting the second result of the fourth executable instructions to the main processor 110, and
- the main processor 110 executing the fifth executable instructions.

An example of the second embodiment of the second aspect of the subject application occurs when the semiconductor system 100 further comprises a second buffer 170 configured to temporarily store results of executed instructions.

In another example of the second embodiment of the second aspect of the subject application, with the main processor 110, the computer-implemented method 200 comprises the step of transmitting the third result of the fifth executable instructions to the coprocessor 120 after buffering by the second buffer 170.

Further, in the example of the second embodiment of the second aspect of the subject application with the coprocessor 120, the computer-implemented method 200 comprises the step of transmitting the second result of the fourth executable instructions to the main processor 110 after buffering by the second buffer 170.

**Third embodiment of the second aspect: multiple role profiles**

A third embodiment of the second aspect of the subject application occurs when a function signature of the function signature database 20 is associated with a plurality of role profiles 10.

In that case, in a first example, with the precompiler 150, the computer-implemented method 200 comprises the step of randomly selecting 221 the role profile 10 out of the plurality of role profiles 10.

Further, in a second example, with the precompiler 150, the computer-implemented method 200 comprises the step of selecting 221 the role profile 10 out of the plurality of role profiles 10 based on a call-context amount per processing elements of the main processor 110 and the coprocessor 120.

Finally, in a third example, with the precompiler 150, the computer-implemented method 200 comprises the step of selecting 221 the role profile 10 out of the plurality of role profiles 10 based on a physical resource utilization (e.g., including memory communication buses and processing elements) of the main processor 110 and the coprocessor 120.

**Various other embodiments**

The description of the subject application has been presented for purposes of illustration and description but is not intended to be exhaustive or limited to the application in the form disclosed. The embodiments were chosen and described to better explain the principles of the application and the practical application, and to enable the skilled person to understand the application for various embodiments with various modifications as are suited to the particular use contemplated.

For instance, the skilled person could easily adapt the teachings of the subject application to make:

- the first buffer 160 and the second buffer 170 being the same element,
- the first buffer 160 and the second buffer 170 being part of the main processor 110, and
- the plurality of role profiles 10 being stored in the memory 130.

**Claims**

1. A semiconductor system (100) configured to provide probabilistic inference data processing comprising:

    - at least one main processor (110),
    - at least one coprocessor (120),
    - at least one memory (130) configured to store,

        -- a set of role profiles (10), each defining the role of the main processor (110) and the role of the coprocessor (120) in executing executable instructions associated with one or more computer program codes, and
        -- a function signature database (20) associating a function signature with at least one role profile (10),

    - at least one compiler (140), and
    - at least one precompiler (150) configured to,

        -- receive a computer program code (30) which is in the form of a high-level programming language and which is implementing at least one probabilistic inference algorithm configured to solve a probabilistic model, the computer program code (30) comprising at least one first high-level programming statement, called sampling step, that is representative of the operation of sampling at least one random sample from at least one probability distribution function,
        -- select a role profile (10) out of a set of role profiles (10), in response to locating a matching entry of a function signature of the sampling step in the function signature database (20), and
        -- generate, based on the computer program code (30) and the selected role profile

(10), a flag information that is indicative of whether the first high-level programming statement is representative of sampling at least one random sample from,

--- a parametric probability distribution function defined by a finite number of input parameters, or
--- a nonparametric probability distribution function defined by a plurality of first input data and at least one intermediate parameter,

wherein,
- the compiler (140) is configured to,

-- convert the computer program code (30) into first executable instructions, based on the flag information generated by the precompiler (150), and
-- distribute portions of the first executable instructions such,

--- the main processor (110) executes at least a first portion of the first executable instructions comprising non-sampling operations, and
--- the coprocessor (120) executes at least a second portion of the first executable instructions comprising sampling operations identified by the flag information, wherein the coprocessor (120) is specialized in executing probability distribution calculations.

2. The semiconductor system (100) of claim 1, wherein,

when,

- the flag information is indicative of the first high-level programming statement being representative of sampling at least one random sample from a parametric probability distribution function, and
- the computer program code (30) comprises at least one second high-level programming statement, called first calculating step, that is representative of the operation of calculating of the input parameters based on at least one previous random sample value and/or at least one second input data,

then,

- the compiler (140) is configured to convert,

-- the computer program code (30) associated with the first calculating step into second executable instructions, and
-- the computer program code (30) associated with the sampling step into third executable instructions,

- the main processor (110) is configured to,

-- execute the second executable instructions, and
-- transmit a first result of the second executable instructions to the coprocessor (120),

- the coprocessor (120) is configured to execute the third executable instructions, while using the first result of the second executable instructions as input parameters, thereby drawing at least one random sample from the probability distribution function using the calculated input parameters.

3. The semiconductor system (100) of claim 2, further comprising a first buffer (160) configured to temporarily store results of executed instructions, wherein the main processor (110) is configured to transmit the first result of the second executable instructions to the coprocessor (120) after buffering by the first buffer (160).

4. The semiconductor system (100) of any one of claims 1 to 3, wherein,

when,

- the flag information is indicative of the first high-level programming statement being representative of sampling at least one random sample from a nonparametric probability distribution function and the first high-level programming statement comprises,

-- at least one first high-level programming sub-statement, called random drawing step, that is representative of the operation of drawing of at least one random sample from a given probability distribution function, and
-- at least one second high-level programming sub-statement, called second calculating step, that is representative of the operation of calculating of the intermediate parameter, based on at least one previous random sample value and/or at least one of the first input data,

then,

- the compiler (140) is configured to convert,

-- the computer program code (30) associated with the random drawing step into fourth executable instructions, and
-- the computer program code (30) associated with the second calculating step into fifth executable instructions,

- the main processor (110) is configured to,

-- execute the fifth executable instructions, and
-- transmit a third result of the fifth executable instructions to the coprocessor (120),

- the coprocessor (120) is configured to,

-- execute the fourth executable instructions, while using the third result of the fifth executable instructions as an intermediate parameter, thereby drawing at least one random sample from the probability distribution function using the first input data, and
-- transmit, when required, a second result of the fourth executable

instructions to the main processor (110).

5. The semiconductor system (100) of claim 4, further comprising a second buffer (170) configured to temporarily store results of executed instructions, wherein,

- the main processor (110) is configured to transmit the third result of the fifth executable instructions to the coprocessor (120) after buffering by the second buffer (170), and
- the coprocessor (120) is configured to transmit the second result of the fourth executable instructions to the main processor (110) after buffering by the second buffer (170).

6. The semiconductor system (100) of any one of claims 1 to 5, wherein when a function signature of the function signature database (20) is associated with a plurality of role profiles (10), then the precompiler (150) is further configured to select the role profile (10) out of the plurality of role profiles (10), either randomly, based on a call-context amount per processing elements of the main processor (110) and the coprocessor (120), or based on a physical resource utilization of the main processor (110) and the coprocessor (120).

7. The semiconductor system (100) of any one of claims 1 to 6, wherein at least one role profile (10) defines the role of each of a plurality of main processors (110).

8. The semiconductor system (100) of any one of claims 1 to 7, wherein at least one role profile (10) defines the role of each of a plurality of coprocessors (120).

9. A computer-implemented method (200) of probabilistic inference data processing in a semiconductor system (100) comprising at least one main processor (110), at least one coprocessor (120), at least one memory (130), at least one compiler (140) and at least one precompiler (150), the memory (130) configured to store,

- a set of role profiles (10), each defining the role of the main processor (110) and the role of the coprocessor (120) in executing executable instructions associated with one or more computer program codes, and
- a function signature database (20) associating a function signature with at least one role profile (10),
- at least one compiler (140),
the method comprising the steps of,
- with the precompiler (150),

-- receiving (210) a computer program code (30) which is in the form of a high-level programming language and which is implementing at least one probabilistic inference algorithm configured to solve a probabilistic model, the computer program code (30) comprising at least one first high-level programming statement, called sampling step, that is representative of the operation of sampling at least one random sample from at least one probability distribution function,
-- selecting (220) a role profile (10) out of the set of role profiles (10), in response to locating a matching entry of a function signature of the sampling step in the function signature database (20), and
-- generating (230), based on the computer program code (30) and the selected role profile (10), a flag information that is indicative of whether the first high-level programming statement is representative of sampling at least one random sample from,

--- a parametric probability distribution function defined by a finite number of input parameters, or
--- a nonparametric probability distribution function defined by a plurality of first input data and at least one intermediate parameter,

- with the compiler (140),

-- converting (240) the computer program code (30) into first executable instructions, based on the flag information generated by the precompiler (150),
-- distributing portions of the first executable instructions such that,

--- with the main processor (110), executing (250) at least a first portion of the first executable instructions comprising non-sampling operations, and
--- with the coprocessor (120), executing (260) at least a second portion of the first executable instructions comprising sampling operations identified by the flag information, wherein the coprocessor (120) is specialized in executing probability distribution calculations.

10. The computer-implemented method (200) of claim 9, wherein,

when,

- the flag information is indicative of the first high-level programming statement being representative of sampling at least one random sample from a parametric probability distribution function, and
- the computer program code (30) comprises at least one second high-level programming statement, called first calculating step, that is representative of the operation of calculating of the input parameters based on at least one previous random sample value and/or at least one second input data,

then,

- with the compiler (140), converting (241),

-- the computer program code (30) associated with the first calculating step into second executable instructions, and
-- the computer program code (30) associated with the sampling step into third executable instructions,

- with the main processor (110),

-- executing (251) the second executable instructions, and

-- transmitting a first result of the second executable instructions to the coprocessor (120)

- with the coprocessor (120), executing (261) the third executable instructions, while using the first result of the second executable instructions as input parameters, thereby drawing at least one random sample from the probability distribution function using the calculated input parameters.

11. The computer-implemented method (200) of any one of claims 9 to 10, further comprising, when the semiconductor system (100) further comprises a first buffer (160) configured to temporarily store results of executed instructions, with the main processor (110), transmitting the first result of the second executable instructions to the coprocessor (120) after buffering by the first buffer (160).

12. The computer-implemented method (200) of any one of claims 9 to 11, wherein,

when,

- the flag information is indicative of the first high-level programming statement being representative of sampling at least one random sample from a nonparametric probability distribution function and the first high-level programming statement comprises,

-- at least one first high-level programming sub-statement, called random drawing step, that is representative of the operation of drawing of at least one random sample from a given probability distribution function, and
-- at least one second high-level programming sub-statement, called second calculating step, that is representative of the operation of calculating of the intermediate parameter, based on at least one previous random sample value and/or at least one of the first input data,

then,

- with the compiler (140), converting (242),

-- the computer program code (30) associated with the random drawing step into fourth executable instructions, and
-- the computer program code (30) associated with the second calculating step into fifth executable instructions,

- with the coprocessor (120),

-- executing (262) the fourth executable instructions from the compiler (140) memory (130), thereby drawing a plurality of random samples from the probability distribution function, and
-- transmitting a second result of the fourth executable instructions to the main processor (110),

- with the main processor (110),

-- executing (252) the fifth executable instructions from the compiler (140) memory (130), while using the second result and/or the first input data as input parameters, thereby calculating at least one intermediate parameter.

13. The computer-implemented method (200) of claim 12, further comprising, when the semiconductor system (100) further comprises a second buffer (170) configured to temporarily store results of executed instructions,

- with the main processor (110), transmitting the third result of the fifth executable instructions to the coprocessor (120) after buffering by the second buffer (170), and/or
- with the coprocessor (120), transmitting the second result of the fourth executable instructions to the main processor (110) after buffering by the second buffer (170).

14. The computer-implemented method (200) of any one of claims 9 to 13, wherein when a function signature of the function signature database (20) is associated with a plurality of role profiles (10), then with the precompiler (150), selecting (221) the role profile (10) out of the plurality of role profiles (10) either randomly, based on a call-context amount per processing elements of the main processor (110) and the coprocessor (120), or based on a physical resource utilization of the main processor (110) and the coprocessor (120).

**Patentansprüche**

1. Halbleitersystem (100), das dazu ausgestaltet ist, probabilistische Verarbeitung von Interferenzdaten bereitzustellen, umfassend:

- mindestens einen Hauptprozessor (110),
- mindestens einen Coprozessor (120),

- mindestens einen Speicher (130), der dazu ausgestaltet ist, zu speichern

-- eine Menge von Rollenprofilen (10), die jeweils die Rolle des Hauptprozessors (110) und die Rolle des Coprozessors (120) beim Ausführen ausführbarer Anweisungen definieren, die einem oder mehreren Computerprogrammcodes zugehörig sind, und
-- eine Funktionssignatur-Datenbank (20), die eine Funktionssignatur mit mindestens einem Rollenprofil (10) verknüpft,

- mindestens einen Compiler (140), und
- mindestens einen Vor-Compiler (150), der ausgestaltet ist zum

-- Empfangen eines Computerprogrammcodes (30), der in der Form einer höheren Programmiersprache vorliegt und der mindestens einen probabilistischen Interferenzalgorithmus implementiert, der dazu ausgestaltet ist, ein probabilistisches Modell zu lösen, wobei der Computerprogrammcode (30) mindestens eine erste höhere Programmieranweisung umfasst, die Stichprobenziehungsschritt genannt wird, die für den Vorgang des Stichprobenziehens mindestens einer Zufallsstichprobe von mindestens einer Wahrscheinlichkeitsverteilungsfunktion repräsentativ ist,
-- Auswählen eines Rollenprofils (10) aus einer Menge von Rollenprofilen (10) als Reaktion auf das Auffinden eines übereinstimmenden Eintrags einer Funktionssignatur des Stichprobenziehungsschritts in der Funktionssignatur-Datenbank (20), und
-- Erzeugen, basierend auf dem Computerprogrammcode (30) und dem ausgewählten Rollenprofil (10), von Flag-Informationen, die angeben, ob die erste höhere Programmieranweisung für das Stichprobenziehen mindestens einer Zufallsstichprobe repräsentativ ist, von

--- einer parametrischen Wahrscheinlichkeitsverteilungsfunktion, die von einer endlichen Anzahl von Eingabeparametern definiert ist, oder
--- einer nichtparametrischen Wahrscheinlichkeitsverteilungsfunktion, die von einer Vielzahl von ersten Eingabedatenelementen und mindestens einem Zwischenparameter definiert ist, wobei

- der Compiler (140) ausgestaltet ist zum

-- Konvertieren des Computerprogrammcodes (30) in erste ausführbare Anweisungen, basierend auf den von dem Vor-Compiler (150) erzeugten Flag-Informationen, und
-- Verteilen von Abschnitten der ersten ausführbaren Anweisungen, derart dass

  --- der Hauptprozessor (110) mindestens einen ersten Abschnitt der ersten ausführbaren Anweisungen ausführt, die Nicht-Stichprobenziehungsvorgänge umfassen, und
  --- der Coprozessor (120) mindestens einen zweiten Abschnitt der ersten ausführbaren Anweisungen ausführt, die Stichprobenziehungsvorgänge umfassen, die von den Flag-Informationen identifiziert werden, wobei der Coprozessor (120) auf das Ausführen von Wahrscheinlichkeitsverteilungsberechnungen spezialisiert ist.

2. Halbleitersystem (100) nach Anspruch 1, wobei,

 wenn

  - die Flag-Informationen angeben, dass die erste höhere Programmieranweisung für das Stichprobenziehen mindestens einer Zufallsstichprobe von einer parametrischen Wahrscheinlichkeitsverteilungsfunktion repräsentativ ist, und
  - der Computerprogrammcode (30) mindestens eine zweite höhere Programmieranweisung umfasst, die erster Berechnungsschritt genannt wird, die für den Vorgang des Berechnens der Eingabeparameter basierend auf mindestens einem vorherigen Zufallsstichprobenwert und/oder mindestens einem zweiten Eingabedatenelement repräsentativ ist,

 dann

  - der Compiler (140), dazu ausgestaltet ist, zu konvertieren

   -- den Computerprogrammcode (30), der dem ersten Berechnungsschritt zugehörig ist, in zweite ausführbare Anweisungen, und
   -- den Computerprogrammcode (30), der dem Stichprobenziehungsschritt zugehörig ist, in dritte ausführbare Anweisungen,

  - der Hauptprozessor (110) ausgestaltet ist zum

   -- Ausführen der zweiten ausführbaren Anweisungen, und
   -- Senden eines ersten Ergebnisses der zweiten ausführbaren Anweisungen an den Coprozessor (120),

 - der Coprozessor (120) dazu ausgestaltet ist, die dritten ausführbaren Anweisungen unter Verwendung des ersten Ergebnisses der zweiten ausführbaren Anweisungen als Eingabeparameter auszuführen, wodurch mindestens eine Zufallsstichprobe von der Wahrscheinlichkeitsverteilungsfunktion unter Verwendung der berechneten Eingabeparameter gezogen wird.

3. Halbleitersystem (100) nach Anspruch 2, ferner umfassend einen ersten Puffer (160), der dazu ausgestaltet ist, vorübergehend Ergebnisse von ausgeführten Anweisungen zu speichern, wobei der Hauptprozessor (110) dazu ausgestaltet ist, nach dem Puffern durch den ersten Puffer (160) das erste Ergebnis der zweiten ausführbaren Anweisungen an den Coprozessor (120) zu senden.

4. Halbleitersystem (100) nach einem der Ansprüche 1 bis 3, wobei,

 wenn

  - die Flag-Informationen die erste höhere Programmieranweisung angeben, die für das Stichprobenziehen mindestens einer Zufallsstichprobe von einer nichtparametrischen Wahrscheinlichkeitsverteilungsfunktion repräsentativ sind, und die erste höhere Vorprogrammierungsanweisung umfasst

   -- mindestens eine erste höhere Vorprogrammierungsunteranweisung, die Zufallsziehungsschritt genannt wird, die für den Vorgang des Ziehens mindestens einer Zufallsstichprobe von einer gegebenen Wahrscheinlichkeitsverteilungsfunktion repräsentativ ist, und
   -- mindestens eine zweite höhere Vorprogrammierungsunteranweisung, die zweiter Berechnungsschritt genannt wird, die für den Vorgang des Berechnens des Zwischenparameters basierend auf mindestens einem vorherigen Zufallsprobenziehungswert und/oder mindestens einem von den ersten Eingabedatenelementen repräsentativ ist,

 dann

- der Compiler (140) dazu ausgestaltet ist, zu konvertieren

-- den Computerprogrammcode (30), der dem Zufallsziehungsschritt zugehörig ist, in vierte ausführbare Anweisungen, und
-- den Computerprogrammcode (30), der dem zweiten Berechnungsschritt zugehörig ist, in fünfte ausführbare Anweisungen,

- der Hauptprozessor (110) ausgestaltet ist zum

-- Ausführen der fünften ausführbaren Anweisungen, und
-- Senden eines dritten Ergebnisses der fünften ausführbaren Anweisungen an den Coprozessor (120),

- der Coprozessor (120) ausgestaltet ist zum

-- Ausführen der vierten ausführbaren Anweisungen unter Verwendung des dritten Ergebnisses der fünften ausführbaren Anweisungen als ein Zwischenparameter, wodurch mindestens eine Zufallsstichprobe von der Wahrscheinlichkeitsverteilungsfunktion unter Verwendung der ersten Eingabedaten gezogen wird, und
-- Senden, wenn erforderlich, eines zweiten Ergebnisses der vierten ausführbaren Anweisungen an den Hauptprozessor (110).

5. Halbleitersystem (100) nach Anspruch 4, ferner umfassend einen zweiten Puffer (170), der dazu ausgestaltet ist, Ergebnisse von ausgeführten Anweisungen vorübergehend zu speichern, wobei

- der Hauptprozessor (110) dazu ausgestaltet ist, das dritte Ergebnis der fünften ausführbaren Anweisungen an den Coprozessor (120) nach dem Puffern durch den zweiten Puffer (170) zu senden, und
- der Coprozessor (120) dazu ausgestaltet ist, das zweite Ergebnis der vierten ausführbaren Anweisungen an den Hauptprozessor (110) nach dem Puffern durch den zweiten Puffer (170) zu senden.

6. Halbleitersystem (100) nach einem der Ansprüche 1 bis 5, wobei, wenn eine Funktionssignatur der Funktionssignatur-Datenbank (20) mit einer Vielzahl von Rollenprofilen (10) verknüpft ist, dann der Vor-Compiler (150) ferner dazu ausgestaltet ist, das Rollenprofil (10) aus der Vielzahl von Rollenprofilen (10) entweder zufällig basierend auf einem Aufrufkontextwert pro Verarbeitungselemente des Hauptprozessors (110) und des Coprozessors (120) oder basierend auf einer physikalischen Ressourcennutzung des Hauptprozessors (110) und des Coprozessors (120) auszuwählen.

7. Halbleitersystem (100) nach einem der Ansprüche 1 bis 6, wobei mindestens ein Rollenprofil (10) die Rolle von jedem einer Vielzahl von Hauptprozessoren (110) definiert.

8. Halbleitersystem (100) nach einem der Ansprüche 1 bis 7, wobei mindestens ein Rollenprofil (10) die Rolle von jedem einer Vielzahl von Coprozessoren (120) definiert.

9. Computerimplementiertes Verfahren (200) zur probabilistischen Verarbeitung von Interferenzdaten in einem Halbleitersystem (100), das mindestens einen Hauptprozessor (110), mindestens einen Coprozessor (120), mindestens einen Speicher (130), mindestens einen Compiler (140) und mindestens einen Vor-Compiler (150) umfasst, wobei der Speicher (130) dazu ausgestaltet ist zu speichern

- eine Menge von Rollenprofilen (10), die jeweils die Rolle des Hauptprozessors (110) und die Rolle des Coprozessors (120) beim Ausführen ausführbarer Anweisungen definieren, die einem oder mehreren Computerprogrammcodes zugehörig sind, und
- eine Funktionssignatur-Datenbank (20), die eine Funktionssignatur mit mindestens einem Rollenprofil (10) verknüpft,
- mindestens einen Compiler (140),
wobei das Verfahren die Schritte umfasst zum
- mit dem Vor-Compiler (150),

-- Empfangen (210) eines Computerprogrammcodes (30), der in der Form einer höheren Programmiersprache vorliegt und der mindestens einen probabilistischen Interferenzalgorithmus implementiert, der dazu ausgestaltet ist, ein probabilistisches Modell zu lösen, wobei der Computerprogrammcode (30) mindestens eine erste höhere Programmieranweisung umfasst, die Stichprobenziehungsschritt genannt wird, die für den Vorgang des Stichprobenziehens mindestens einer Zufallsstichprobe von mindestens einer Wahrscheinlichkeitsverteilungsfunktion repräsentativ ist,
-- Auswählen (220) eines Rollenprofils (10) aus der Menge von Rollenprofilen (10) als Reaktion auf das Auffinden eines übereinstimmenden Eintrags einer Funktionssignatur des Stichprobenziehungsschritts in der Funktionssignatur-Datenbank (20), und
-- Erzeugen (230), basierend auf dem Computerprogrammcode (30) und dem ausgewählten Rollenprofil (10), von Flag-Informationen, die angeben, ob die erste höhere Programmieranweisung für das Stichprobenziehen mindestens einer Zufallsstichprobe repräsentativ ist, von

    --- einer parametrischen Wahrscheinlichkeitsverteilungsfunktion, die von einer endlichen Anzahl von Eingabeparametern definiert ist, oder
    --- einer nichtparametrischen Wahrscheinlichkeitsverteilungsfunktion, die von einer Vielzahl von ersten Eingabedatenelementen und mindestens einem Zwischenparameter definiert ist,

- mit dem Compiler (140),

    -- Konvertieren (240) des Computerprogrammcodes (30) in erste ausführbare Anweisungen, basierend auf den von dem Vor-Compiler (150) erzeugten Flag-Informationen,
    **--** Verteilen von Abschnitten der ersten ausführbaren Anweisungen, derart dass

        --- mit dem Hauptprozessor (110), Ausführen (250) mindestens eines ersten Abschnitts der ersten ausführbaren Anweisungen, die Nicht-Stichprobenziehungsvorgänge umfassen, und
        **---** mit dem Coprozessor (120), Ausführen (260) mindestens eines zweiten Abschnitts der ersten ausführbaren Anweisungen, die Stichprobenziehungsvorgänge umfassen, die von den Flag-Informationen identifiziert werden, wobei der Coprozessor (120) auf das Ausführen von Wahrscheinlichkeitsverteilungsberechnungen spezialisiert ist.

10. Computerimplementiertes Verfahren (200) nach Anspruch 9, wobei,

    wenn,

    - die Flag-Informationen angeben, dass die erste höhere Programmieranweisung für das Stichprobenziehen mindestens einer Zufallsstichprobe von einer parametrischen Wahrscheinlichkeitsverteilungsfunktion repräsentativ ist, und
    - der Computerprogrammcode (30) mindestens eine zweite höhere Programmieranweisung umfasst, die erster Berechnungsschritt genannt wird, die für den Vorgang des Berechnens der Eingabeparameter basierend auf mindestens einem vorherigen Zufallsstichprobenwert und/oder mindestens einem zweiten Eingabedatenelement repräsentativ ist,

dann

    - mit dem Compiler (140), Konvertieren (241)

        **--** des Computerprogrammcodes (30), der dem ersten Berechnungsschritt zugehörig ist, in zweite ausführbare Anweisungen, und
        -- des Computerprogrammcodes (30), der dem Stichprobenziehungsschritt zugehörig ist, in dritte ausführbare Anweisungen,

    - mit dem Hauptprozessor (110),

        -- Ausführen (251) der zweiten ausführbaren Anweisungen, und
        -- Senden eines ersten Ergebnisses der zweiten ausführbaren Anweisungen an den Coprozessor (120),

    - mit dem Coprozessor (120), Ausführen (261) der dritten ausführbaren Anweisungen unter Verwendung des ersten Ergebnisses der zweiten ausführbaren Anweisungen als Eingabeparameter, wodurch mindestens eine Zufallsstichprobe von der Wahrscheinlichkeitsverteilungsfunktion unter Verwendung der berechneten Eingabeparameter gezogen wird.

11. Computerimplementiertes Verfahren (200) nach einem der Ansprüche 9 bis 10, ferner umfassend, wenn das Halbleitersystem (100) ferner einen ersten Puffer (160) umfasst, der dazu ausgestaltet ist, Ergebnisse ausgeführter Anweisungen vorübergehend zu speichern, mit dem Hauptprozessor (110), Senden des ersten Ergebnisses der zweiten ausführbaren Anweisungen an den Coprozessor (120) nach dem Puffern durch den ersten Puffer (160).

12. Computerimplementiertes Verfahren (200) nach einem der Ansprüche 9 bis 11, wobei,

    wenn

    - die Flag-Informationen die erste höhere Programmieranweisung angeben, die für das Stichprobenziehen mindestens einer Zufallsstichprobe von einer nichtparametrischen Wahrscheinlichkeitsverteilungsfunktion repräsentativ ist und die erste höhere Vorprogrammierungsanweisung umfasst

-- mindestens eine erste höhere Vorprogrammierungsunteranweisung, die Zufallsziehungsschritt genannt wird, die für den Vorgang des Ziehens mindestens einer Zufallsstichprobe von einer gegebenen Wahrscheinlichkeitsverteilungsfunktion repräsentativ ist, und
-- mindestens eine zweite höhere Vorprogrammierungsunteranweisung, die zweiter Berechnungsschritt genannt wird, die für den Vorgang des Berechnens des Zwischenparameters basierend auf mindestens einem vorherigen Zufallsprobenziehungswert und/oder mindestens einem von den ersten Eingabedatenelementen repräsentativ ist,

dann

- mit dem Compiler (140), Konvertieren (242)

-- des Computerprogrammcodes (30), der dem Zufallsziehungsschritt zugehörig ist, in vierte ausführbare Anweisungen, und
-- des Computerprogrammcodes (30), der dem zweiten Berechnungsschritt zugehörig ist, in fünfte ausführbare Anweisungen,

- mit dem Coprozessor (120)

-- Ausführen (262) der vierten ausführbaren Anweisungen von dem Speicher (130) des Compilers (140), wodurch eine Vielzahl von Zufallsstichproben von der Wahrscheinlichkeitsverteilungsfunktion gezogen werden, und
-- Senden eines zweiten Ergebnisses der vierten ausführbaren Anweisungen an den Hauptprozessor (110),

- mit dem Hauptprozessor (110)

-- Ausführen (252) der fünften ausführbaren Anweisungen von dem Speicher (130) des Compilers (140) unter Verwendung des zweiten Ergebnisses und/oder der ersten Eingabedaten als Eingabeparameter, wodurch mindestens ein Zwischenparameter berechnet wird.

13. Computerimplementiertes Verfahren (200) nach Anspruch 12, ferner umfassend, wenn das Halbleitersystem (100) ferner einen zweiten Puffer (170) umfasst, der dazu ausgestaltet ist, vorübergehend Ergebnisse von ausgeführten Anweisungen zu speichern,

- mit dem Hauptprozessor (110), Senden des dritten Ergebnisses der fünften ausführbaren Anweisungen an den Coprozessor (120) nach dem Puffern durch den zweiten Puffer (170), und/oder
- mit dem Coprozessor (120), Senden des zweiten Ergebnisses der vierten ausführbaren Anweisungen an den Hauptprozessor (110) nach dem Puffern durch den zweiten Puffer (170).

14. Computerimplementiertes Verfahren (200) nach einem der Ansprüche 9 bis 13, wobei, wenn eine Funktionssignatur der Funktionssignatur-Datenbank (20) mit einer Vielzahl von Rollenprofilen (10) verknüpft ist, dann, mit dem Vor-Compiler (150), Auswählen (221) des Rollenprofils (10) von der Vielzahl von Rollenprofilen (10) entweder zufällig basierend auf einem Aufrufkontextwert pro Prozessorelemente des Hauptprozessors (110) und des Coprozessors (120) oder basierend auf einer physikalischen Ressourcennutzung des Hauptprozessors (110) und des Coprozessors (120).

## Revendications

1. Système semiconducteur (100) configuré pour fournir un traitement de données d'inférence probabiliste comprenant :

- au moins un processeur principal (110),
- au moins un coprocesseur (120),
- au moins une mémoire (130) configurée pour stocker,

-- un ensemble de profils de rôle (10), définissant chacun le rôle du processeur principal (110) et le rôle du coprocesseur (120) dans l'exécution d'instructions exécutables associées à un ou plusieurs codes de programme informatique, et
-- une base de données de signature de fonction (20) associant une signature de fonction à au moins un profil de rôle (10),

- au moins un compilateur (140), et
- au moins un précompilateur (150) configuré pour,

**--** recevoir un code de programme informatique (30) qui est sous la forme d'un langage de programmation de haut niveau et qui met en œuvre au moins un algorithme d'inférence probabiliste configuré pour résoudre un modèle probabiliste, le code de programme informatique (30) comprenant au moins une première instruction de programmation de haut niveau, appelée pas d'échantillonnage, qui est représentative de l'opération d'échantillonnage d'au moins un échantillon aléatoire à partir d'au moins une fonction de distribution de probabilités,

**--** sélectionner un profil de rôle (10) parmi un ensemble de profils de rôle (10), en réponse au fait d'avoir localisé une entrée correspondante d'une signature de fonction du pas d'échantillonnage dans la base de données de signature de fonction (20), et

-- produire, sur la base du code de programme informatique (30) et du profil de rôle (10) sélectionné, une information de drapeau qui indique si oui ou non la première instruction de programmation de haut niveau est représentative de l'échantillonnage d'au moins un échantillon aléatoire à partir de,

- -- une fonction de distribution de probabilités paramétrique définie par un nombre fini de paramètres d'entrée, ou
- -- une fonction de distribution de probabilités non paramétrique définie par une pluralité de premières données d'entrée et au moins un paramètre intermédiaire,

dans lequel,

- le compilateur (140) est configuré pour,

-- convertir le code de programme informatique (30) en premières instructions exécutables, sur la base de l'information de drapeau produite par le précompilateur (150), et

-- distribuer des parties des premières instructions exécutables de sorte que,

--- le processeur principal (110) exécute au moins une première partie des premières instructions exécutables comprenant des opérations de non-échantillonnage, et

--- le coprocesseur (120) exécute au moins une deuxième partie des premières instructions exécutables comprenant des opérations d'échantillonnage identifiées par l'information de drapeau, dans lequel le coprocesseur (120) est spécialisé dans l'exécution de calculs de distribution de probabilités.

2. Système semiconducteur (100) selon la revendication 1, dans lequel,

lorsque,

- l'information de drapeau indique que la première instruction de programmation de haut niveau est représentative de l'échantillonnage d'au moins un échantillon aléatoire à partir d'une fonction de distribution de probabilités paramétrique, et
- le code de programme informatique (30) comprend au moins une deuxième instruction de programmation de haut niveau, appelée premier pas de calcul, qui est représentative de l'opération de calcul des paramètres d'entrée sur la base d'au moins une valeur d'échantillon aléatoire précédente et/ou d'au moins une deuxième donnée d'entrée,

alors,

- le compilateur (140) est configuré pour convertir,

-- le code de programme informatique (30) associé au premier pas de calcul en deuxièmes instructions exécutables, et

-- le code de programme informatique (30) associé au pas d'échantillonnage en troisièmes instructions exécutables,

- le processeur principal (110) est configuré pour,

-- exécuter les deuxièmes instructions exécutables, et

-- transmettre un premier résultat des deuxièmes instructions exécutables au coprocesseur (120),

- le coprocesseur (120) est configuré pour exécuter les troisièmes instructions exécutables, tout en utilisant le premier résultat des deuxièmes instructions exécutables en tant que paramètres d'entrée, prélevant ainsi au moins un échantillon aléatoire à partir de la fonction de distribution de probabilités à l'aide des paramètres d'entrée calculés.

3. Système semiconducteur (100) selon la revendication 2, comprenant en outre un premier tampon (160) configuré pour stocker temporairement des résultats d'instructions exécutées, dans lequel le processeur principal (110) est configuré pour transmettre le premier résultat des deuxièmes instructions exécutables au coprocesseur (120) après mise en mémoire tampon par le premier tampon (160).

4. Système semiconducteur (100) selon l'une quelconque des revendications 1 à 3, dans lequel,

lorsque,

- l'information de drapeau indique que la première instruction de programmation de haut niveau est représentative de l'échantillonnage d'au moins un échantillon aléatoire à partir d'une fonction de distribution de probabilités non paramétrique et que la première instruction de programmation de haut niveau comprend,

-- au moins une première sous-instruction de programmation de haut niveau, appelée pas de prélèvement aléatoire, qui est représentative de l'opération de prélèvement d'au moins un échantillon aléatoire à partir d'une fonction de distribution de probabilités donnée, et
- au moins une deuxième sous-instruction de programmation de haut niveau, appelée deuxième pas de calcul, qui est représentative de l'opération de calcul du paramètre intermédiaire, sur la base d'au moins une valeur d'échantillon aléatoire précédente et/ou d'au moins l'une des premières données d'entrée,

alors,

- le compilateur (140) est configuré pour convertir,

-- le code de programme informatique (30) associé au pas de prélèvement aléatoire en quatrièmes instructions exécutables, et
-- le code de programme informatique (30) associé au deuxième pas de calcul en cinquièmes instructions exécutables,

- le processeur principal (110) est configuré pour,

-- exécuter les cinquièmes instructions exécutables, et
-- transmettre un troisième résultat des cinquièmes instructions exécutables au coprocesseur (120),

- le coprocesseur (120) est configuré pour,

-- exécuter les quatrièmes instructions exécutables, tout en utilisant le troisième résultat des cinquièmes instructions exécutables en tant que paramètre intermédiaire, prélevant ainsi au moins un échantillon aléatoire à partir de la fonction de distribution de probabilités à l'aide de la première donnée d'entrée, et
-- transmettre, si demandé, un deuxième résultat des quatrièmes instructions exécutables au processeur principal (110).

5. Système semiconducteur (100) selon la revendication 4, comprenant en outre un second tampon (170) configuré pour stocker temporairement des résultats d'instructions exécutées, dans lequel,

- le processeur principal (110) est configuré pour transmettre le troisième résultat des cinquièmes instructions exécutables au coprocesseur (120) après mise en mémoire tampon par le second tampon (170), et
- le coprocesseur (120) est configuré pour transmettre le deuxième résultat des quatrièmes instructions exécutables au processeur principal (110) après mise en mémoire tampon par le second tampon (170).

6. Système semiconducteur (100) selon l'une quelconque des revendications 1 à 5, dans lequel, lorsqu'une signature de fonction de la base de données de signature de fonction (20) est associée à une pluralité de profils de rôle (10), le précompilateur (150) est alors en outre configuré pour sélectionner le profil de rôle (10) parmi la pluralité de profils de rôle (10), soit de façon aléatoire, sur la base d'une quantité de contexte d'appel par éléments de traitement du processeur principal (110) et du coprocesseur (120), soit sur la base d'une utilisation de ressource physique du processeur principal (110) et du coprocesseur (120).

7. Système semiconducteur (100) selon l'une quelconque des revendications 1 à 6, dans lequel au moins un profil de rôle (10) définit le rôle de chacun parmi une pluralité de processeurs principaux (110).

8. Système semiconducteur (100) selon l'une quelconque des revendications 1 à 7, dans lequel au moins un profil de rôle (10) définit le rôle de chacun parmi une pluralité de coprocesseurs (120).

**9.** Procédé mis en œuvre par ordinateur (200) de traitement de données d'inférence probabiliste dans un système semiconducteur (100) comprenant au moins un processeur principal (110), au moins un coprocesseur (120), au moins une mémoire (130), au moins un compilateur (140) et au moins un précompilateur (150), la mémoire (130) étant configurée pour stocker,

- un ensemble de profils de rôle (10), définissant chacun le rôle du processeur principal (110) et le rôle du coprocesseur (120) dans l'exécution d'instructions exécutables associées à un ou plusieurs codes de programme informatique, et
- une base de données de signature de fonction (20) associant une signature de fonction à au moins un profil de rôle (10),
- au moins un compilateur (140),
le procédé comprenant les étapes de,
- avec le précompilateur (150),

-- réception (210) d'un code de programme informatique (30) qui est sous la forme d'un langage de programmation de haut niveau et qui met en œuvre au moins un algorithme d'inférence probabiliste configuré pour résoudre un modèle probabiliste, le code de programme informatique (30) comprenant au moins une première instruction de programmation de haut niveau, appelée pas d'échantillonnage, qui est représentative de l'opération d'échantillonnage d'au moins un échantillon aléatoire à partir d'au moins une fonction de distribution de probabilités,
-- sélection (220) d'un profil de rôle (10) parmi l'ensemble de profils de rôle (10), en réponse au fait d'avoir localisé une entrée correspondante d'une signature de fonction du pas d'échantillonnage dans la base de données de signature de fonction (20), et
-- production (230), sur la base du code de programme informatique (30) et du profil de rôle (10) sélectionné, d'une information de drapeau qui indique si oui ou non la première instruction de programmation de haut niveau est représentative de l'échantillonnage d'au moins un échantillon aléatoire à partir de,

--- une fonction de distribution de probabilités paramétrique définie par un nombre fini de paramètres d'entrée, ou
--- une fonction de distribution de probabilités non paramétrique définie par une pluralité de premières données d'entrée et au moins un paramètre intermédiaire,

- avec le compilateur (140),

-- conversion (240) du code de programme informatique (30) en premières instructions exécutables, sur la base de l'information de drapeau produite par le précompilateur (150),
-- distribution de parties des premières instructions exécutables de sorte que,

--- avec le processeur principal (110), il y ait exécution (250) d'au moins une première partie des premières instructions exécutables comprenant des opérations de non-échantillonnage, et
--- avec le coprocesseur (120), il y ait exécution (260) d'au moins une deuxième partie des premières instructions exécutables comprenant des opérations d'échantillonnage identifiées par l'information de drapeau, dans lequel le coprocesseur (120) est spécialisé dans l'exécution de calculs de distribution de probabilités.

**10.** Procédé mis en œuvre par ordinateur (200) selon la revendication 9, dans lequel,

lorsque,

- l'information de drapeau indique que la première instruction de programmation de haut niveau est représentative de l'échantillonnage d'au moins un échantillon aléatoire à partir d'une fonction de distribution de probabilités paramétrique, et
- le code de programme informatique (30) comprend au moins une deuxième instruction de programmation de haut niveau, appelée premier pas de calcul, qui est représentative de l'opération de calcul des paramètres d'entrée sur la base d'au moins une valeur d'échantillon aléatoire précédente et/ou d'au moins une deuxième donnée d'entrée,

alors,

- avec le compilateur (140), conversion (241),

-- du code de programme informatique (30) associé au premier pas de calcul en deuxièmes instructions exécutables, et
-- du code de programme informatique (30) associé au pas d'échantillonnage en troisièmes instructions exécutables,

- avec le processeur principal (110),

-- exécution (251) des deuxièmes instructions exécutables, et

-- transmission d'un premier résultat des deuxièmes instructions exécutables au coprocesseur (120),

- avec le coprocesseur (120), exécution (261) des troisièmes instructions exécutables, tout en utilisant le premier résultat des deuxièmes instructions exécutables en tant que paramètres d'entrée, prélevant ainsi au moins un échantillon aléatoire à partir de la fonction de distribution de probabilités à l'aide des paramètres d'entrée calculés.

11. Procédé mis en œuvre par ordinateur (200) selon l'une quelconque des revendications 9 à 10, comprenant en outre, lorsque le système semiconducteur (100) comprend en outre un premier tampon (160) configuré pour stocker temporairement des résultats d'instructions exécutées, avec le processeur principal (110), la transmission du premier résultat des deuxièmes instructions exécutables au coprocesseur (120) après mise en mémoire tampon par le premier tampon (160).

12. Procédé mis en œuvre par ordinateur (200) selon l'une quelconque des revendications 9 à 11, dans lequel,

lorsque,

- l'information de drapeau indique que la première instruction de programmation de haut niveau est représentative de l'échantillonnage d'au moins un échantillon aléatoire à partir d'une fonction de distribution de probabilités non paramétrique et que la première instruction de programmation de haut niveau comprend,

-- au moins une première sous-instruction de programmation de haut niveau, appelée pas de prélèvement aléatoire, qui est représentative de l'opération de prélèvement d'au moins un échantillon aléatoire à partir d'une fonction de distribution de probabilités donnée, et
- au moins une deuxième sous-instruction de programmation de haut niveau, appelée deuxième pas de calcul, qui est représentative de l'opération de calcul du paramètre intermédiaire, sur la base d'au moins une valeur d'échantillon aléatoire précédente et/ou d'au moins l'une des premières données d'entrée,

alors,

- avec le compilateur (140), conversion (242),

-- du code de programme informatique (30) associé au pas de prélèvement aléatoire en quatrièmes instructions exécutables, et
-- du code de programme informatique (30) associé au deuxième pas de calcul en cinquièmes instructions exécutables,

- avec le coprocesseur (120),

-- exécution des quatrièmes instructions exécutables à partir de la mémoire (130) de compilateur (140), prélevant ainsi une pluralité d'échantillons aléatoires à partir de la fonction de distribution de probabilités, et
-- transmission d'un deuxième résultat des quatrièmes instructions exécutables au processeur principal (110),

- avec le processeur principal (110),

-- exécution (252) des cinquièmes instructions exécutables à partir de la mémoire (130) de compilateur (140), tout en utilisant le deuxième résultat et/ou la première donnée d'entrée en tant que paramètres d'entrée, calculant ainsi au moins un paramètre intermédiaire.

13. Procédé mis en œuvre par ordinateur (200) selon la revendication 12, comprenant en outre, lorsque le système semiconducteur (100) comprend en outre un second tampon (170) configuré pour stocker temporairement des résultats d'instructions exécutées,

- avec le processeur principal (110), la transmission du troisième résultat des cinquièmes instructions exécutables au coprocesseur (120) après mise en mémoire tampon par le second tampon (170), et/ou
- avec le coprocesseur (120), la transmission du deuxième résultat des quatrièmes instructions exécutables au processeur principal (110) après mise en mémoire tampon par le second tampon (170).

14. Procédé mis en œuvre par ordinateur (200) selon l'une quelconque des revendications 9 à 13, dans lequel lorsqu'une signature de fonction de la base de données de signature de fonction (20) est associée à une pluralité de profils de rôle (10), alors avec le précompilateur (150), sélection (221) du profil de rôle (10) parmi la pluralité de profils de rôle (10), soit de façon aléatoire, sur la base d'une quantité de contexte d'appel par éléments de traitement du processeur principal (110) et du coprocesseur (120), soit sur la base d'une utilisation de ressource physique du processeur principal (110) et du coprocesseur (120).

[Fig. 1]

Fig. 1

[Fig. 2]

Fig. 2

**EP 4 565 949 B1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **RAHMAN, REZAUR.** *Xeon Phi Core Microarchitecture*, 2013

- **PANDOLFI, S.** ; **BARTOLUCCI, F.** ; **FRIEL, N.** A generalization of the Multiple-try Metropolis algorithm for Bayesian estimation and model selection. *Proceedings of the Thirteenth International Conference on Artificial Intelligence and Statistics, in Proceedings of Machine Learning Research*, 2010, vol. 9, 581-588, https://proceedings.mlr.press/v9/pandolfi10a.html